# EUROPEAN PATENT SPECIFICATION

(11) **EP 2 388 878 B1**
(45) Date of publication and mention of the grant of the patent: **22.07.2015**
(21) Application number: 11166841.4
(22) Date of filing: 20.05.2011
(51) Int. Cl.: H02G 7/05, H02G 7/20, E04H 12/22

(54) **Transmission line tower**
Übertragungsleitungsturm
Tour de ligne de transmission

(30) Priority: 21.05.2010 FI 20105568; 22.07.2010 FI 20105816
(43) Date of publication of application: 23.11.2011
(73) Proprietor: Al Design Oy, 69730 Tunkkari (FI)
(72) Inventor: Siivonen, Taisto, 00150 Helsinki (FI)
(74) Representative: Helke, Kimmo Kalervo

(56) References cited:
- EP-A1- 0 991 831
- EP-A1- 1 677 401
- CN-A- 101 692 545
- DE-B- 1 060 123
- GB-A- 755 491
- GB-A- 1 409 888
- SU-A1- 872 712
- US-A- 3 343 315
- US-A1- 2001 000 839

## Description

The present invention relates to a one-legged high voltage transmission-line tower, which high voltage transmission-line tower includes a guyed tower part as a leg and its foundation, insulators carrying the phase conductors of a 3-phase transmission line, earth-wires and earth-wire peaks carrying them and supported on a beam gantry and the tower part.

In Finland, 110-kV high voltage transmission lines, for example, have been traditionally implemented using portal supports. An advantage of portal supports is torsional stiffness, for example, in a situation in which a phase conductor breaks, when the phase conductor on the opposite side creates a powerful torque twisting the tower. The torsional strain in portal supports is effectively led to the guys. However, a problem in portal supports is the fact that the two-legged structure of portal supports, combined with the longer beam gantry, makes it a considerably heavier and wider structure than a one-legged solution.

A problem in rigid-construction one-legged high voltage transmission-line towers according to the prior art is that the breaking of a phase conductor causes a powerful torque in the tower, which acts on the leg and foundation. If a one-legged tower is used with guy-lines from the ends of the beam gantry, the solution will be quite wide. This widens the line corridor, resulting in increased costs, both in line investment and in maintenance of the line corridor.

Also known from the prior art is publication GB 755,491, Figures 5 - 7 of which present a tower solution, in which two posts are bound to each other with a cable and form a solution corresponding to a guyed portal support. The figures also show a solution, in which the guys of both posts start from support points corresponding to those in a portal support. In both embodiments, the torsional forces arising in a wire break are taken by the guys. In addition, rigid connections, which correspond fully to rigid lattice towers, are known from the prior art. One such is disclosed in publication CN 201252381 Y. US 3,343,315 discloses a one-legged high voltage transmission-line tower according to the preamble of claim 1.

The present invention is intended to create a simpler high voltage transmission-line tower than previously. The features of the invention are presented in the accompanying Claim 1.

This intention can be achieved by using a one-legged high voltage transmission-line tower, which includes at its lower end a coupling transmitting torque, permitting the tower part to tilt. The high voltage transmission-line tower includes a guyed tower part as a leg and its foundation, insulators for carry-ing the phase conductors for a 3-phase high voltage transmis-sion line, and earth-wire peaks for carrying earth wires supported on a beam gantry and the tower part. Thanks to the torsionally rigid coupling the guys are not needed to cancel the large torque of a fault situation, as is required in solutions according to the prior art, instead the coupling transmits the effect of the torque to the foundation of the high voltage transmission-line tower.

The coupling transmitting the torque is preferably a so-called Oldham coupling. According to one embodiment, the upper end of the high voltage transmission-line tower includes earth peaks set in a V form, between which the insulators carrying the third phase conductor are attached, and in which the earth wires are attached to extensions of the earth peaks above and to the side of the phase conductors. The tower part and/or the earth peaks can be of high-strength steel or galvanized steel.

The high voltage transmission-line tower preferably includes three guys, of which one guy is on one side of the high voltage transmission-line corridor and the other two guys are on the other side of the high voltage transmission-line corridor, and all guys are located essentially at the edges of the high voltage transmission-line corridor.

The guy slope of one of the guys of the high voltage transmission-line tower, seen from the direction of the line, can be 3:1, and the guy slopes of the other two guys seen at right angles to the line can be 5:2. Thus, the slopes of the guys can be easily varied within limits of ± 25 % of the said ratios, depending on the magnitude of the force parallel to the line.

Most preferably, the high voltage transmission-line tower is suitable for use as an intermediate support.

According to one embodiment, the high voltage transmission-line tower is manufactured from a tubular construction. A maximum torsional stiffness will be achieved by means of a tubular construction.

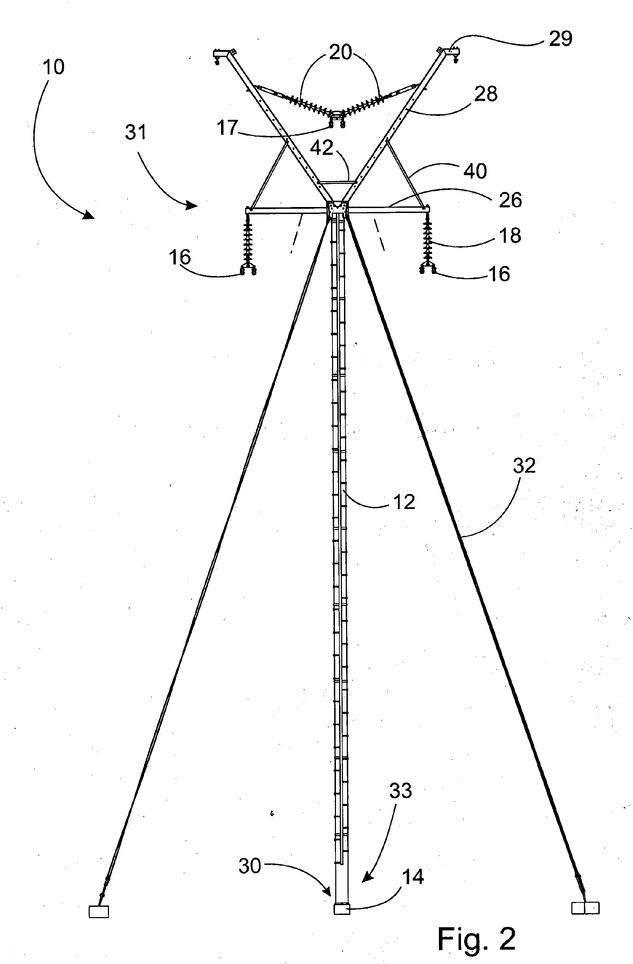

According to one embodiment, there can be intermediate guys in high voltage transmission-line towers, in order to increase the buckling-resistance capacity. There can be a horizontal support between the earth peaks, in order to support the earth peaks. Alternatively, the upper attachment solution of a high voltage transmission-line tower can be shaped to better withstand torsion. The invention also permits the guy attachment points to be moved to a beam gantry or a horizontal support between the earth peaks. Due to the guy (cable) having a lower modulus of elasticity than the tower part, even a small lateral shift (e.g., 20 - 50 cm) of the support point of the guys (shown as a broken line in Figure 2) will be very advantageous, if it is wished to increase the torsional stiffness achieved with the aid of the guying.

Considerable advantages are achieved by means of a triangular arrangement of the wires of the structure of the high voltage transmission-line tower and the guy sloping. By means of the triangular arrangement, the magnetic and electrical fields are reduced to a fraction of those of the prior art. By means of this arrangement, in the case of 110-kV lines, the high voltage transmission-line corridor can be reduced from 26 m to about 16 m, depending on the maximum voltage. The high voltage transmission-line tower can be implemented with three or four guys and can be applied to 220-kV and 400-kV high voltage transmission lines. When using three guys, the foundation work becomes considerably cheaper than that for the towers presently used, thus also reducing the material costs.

The beam gantry, Y-fork, and leg can also be implemented using combinations: lattice construction, steel tube, wooden tower, or concrete column (tower part). The maximum loadings of a tower in a straight high voltage transmission line are usually caused by wind loading and the subsequent strains in the guys or tower part are proportional to the vertical angle of the guy. In the structure referred to above, the angle is always constant. In the portal support generally used in Finland, the slope of the guy varies as a function of height. If the distance between the legs of a portal support is about 5,2 m, then for an 18-m tower the slope will be (18+2/2) / (5, 2/2) = app. 7,7:1. In this case, the height of the leg is 18 m and the anchoring depth is 2 m.

The loadings of the structures (foundations, guys, anchor slabs, and the actual tower part) can be roughly dimensioned as about 3 / 7,7 = 39 % of the load of a normal portal support at a tower height of 18 m (to the beam gantry). As a result, the foundation solutions in soft ground and also the guying solutions will be significantly cheaper than those of normal portal supports. The perpendicular installation of a one-legged column is really easy compared to the installation of a generally-used portal support, which has two sloping legs (8/1).

In the structure, high-strength steel tube is preferably used as the leg, so that the torsion strains (the load parallel to the line, i.e. the so-called 'security load') can be taken. The strength of the steel tube can be, for example, in the range 420 - 500 N/mm². Most preferably, weather-resistant steel is used, so that the structures will not need to be protected or patched. The structures can also be manufactured from galvanized steel. The use of a tubular structure is intended to minimize the work both in the workshop and on site. Wood or concrete can also be used as the material, but in that case the dimensions must be increased, because the torsional stiffness of the tower must correspond to that of a steel tube.

The transmission of force is preferably implemented using a so-called Oldham coupling, which permits a pivoted solution parallel and perpendicular to the high voltage transmission line, but which transmits the effect of the torsion to the foundation, by means of the said coupling placed in the foundation. The location of the earth wires is placed outside the edge phase (negative shielding angle) and higher than normal on account of the lightning protection and so that in the snow-load area the earth wire will always remain above the edge phase. The same square-tube profile and strength as in the beam gantry, for example, can be used in the earth peaks. The aim is to use as few profile sizes and parts as possible. The height and strength of the earth peak also means that the fall of ice from the span will be softened, nor will the load in question damage the structure itself.

The weight of the structure presented is about 60 % of the weight of a corresponding portal support (2 Duck conductors). The reduction in weight permits a smallish helicopter to be used in the installation of the tower. The reduction in weight considerably accelerates the installation work, as does the number of installation bolts, of which there are only about twenty.

If weather-resistant high-strength steel (500 N/mm²) is used as the leg or also in the beam gantry structures, galvanization can be omitted (zinc demands a great deal of energy and is toxic, the removal of which in recycling is an additional cost) and thus accelerates manufacture and reduces costs.

The application of the high voltage transmission-line tower is competitive with the generally used 110-kV wooden towers. The high voltage transmission-line tower can be implemented without noxious substances such as the creosote or copper impregnation in a wooden tower. In addition, the structure is fully recyclable. The high voltage transmission-line tower according to the invention is best suited to use as an intermediate support.

In the accompanying figures, the invention is presented with the aid of examples, in which figures:
- Figures 1 - 3: show the high voltage transmission-line tower as an intermediate support, seen from different angles,
- Figures 4a - 4d: show the parts of an Oldham coupling.

In the figures, the earth frame formed of the earth peaks is a Y-fork and there are two earth wires above. The current conductor can be a current wire with a different diameter, of which the most common is the so-called DUCK. In the most important lines, there can be two current conductors for each phase. Anchoring is implemented by means of guys, which are secured to rectangular prefabricated slabs at a depth of about 2 m. The side dimensions of the foundation slab of a mushroom column (not shown) can vary within the range 1000 - 2400 mm, according to ground conditions while the side dimensions of the column can be 400 mm x 400 mm, the height also varying according to the ground conditions.

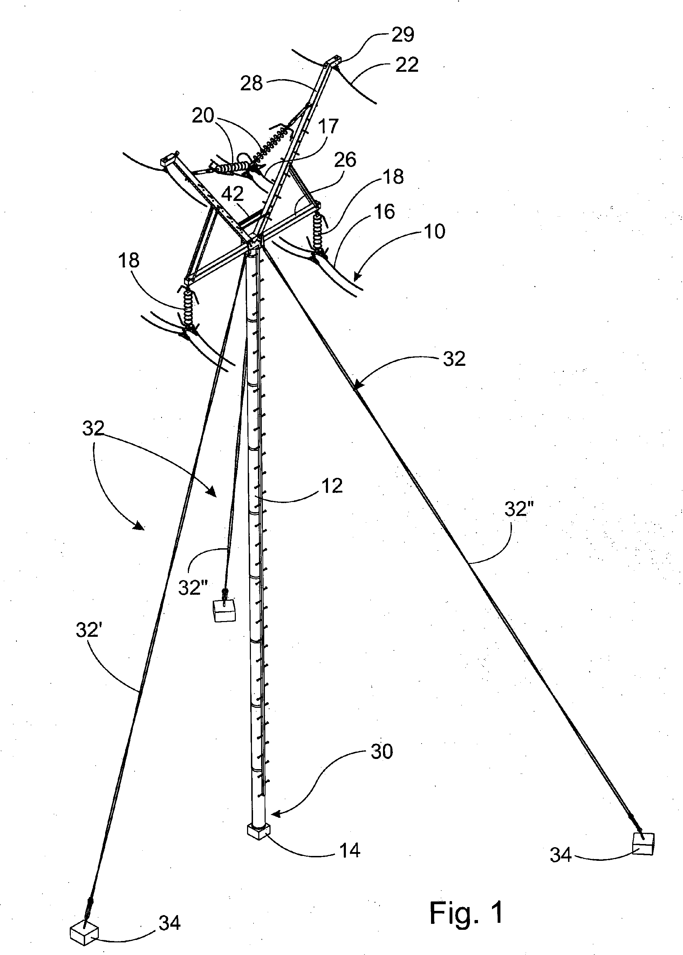

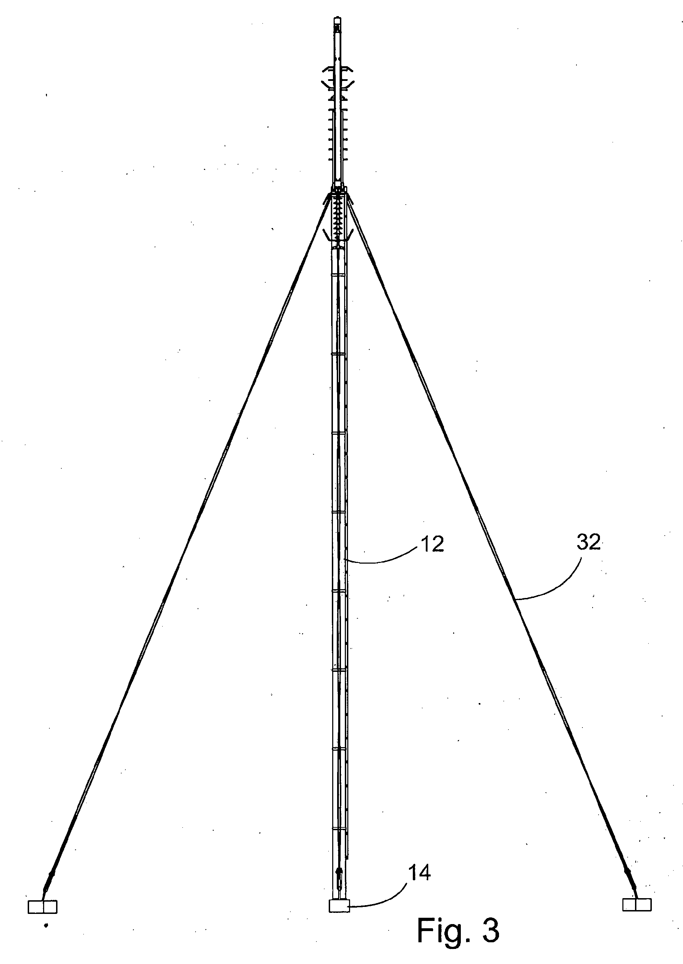

In Figures 1 - 3, the high voltage transmission-line tower as a totality is marked with the reference number 10. It includes a tower part 12, its foundation 14, a horizontal beam gantry 26, slanting earth peaks 28, insulators 18 and 20, as guys 32. Preferably, there are only three guys, or four if necessary, but their number can vary according to the application (depending on the intermediate guys). In Figure 1, the high voltage transmission-line tower 10 includes three guys 32, of which one guy 32' is on one side of the high voltage transmission-line corridor and two guys 32" are on the other side of the high voltage transmission-line corridor, and all the guys 32 are located essentially at the edges of the high voltage transmission-line corridor. The lower phase conductors 16 (as double wires) are supported on insulators 18 at the ends of the beam gantry 26. The upper phase conductor 17 (as a double wire) is supported on insulators 20 suspended between earth peaks 28 made in a V shape. The earth wires 22 are each supported at the end of an extension 29 of the earth peak 28.

The high voltage transmission-line tower according to the invention can be implemented with the aid of three guys. The location of the guys is preferably at or near (inside the building boundary) the edges of the high voltage transmission-line corridor, so that the solution does not increase the required width of the high voltage transmission-line corridor. In a three-guy embodiment (the slopes of the guys being, for example, 3:1 and 2,5:1), the angles between the guys are preferably about 100° x 1 and about 130° x 2, but the angles can also vary according to the applications. According to Figure 2, on one side of the high voltage transmission-line corridor there are two guys and on the other side one guy. In this projection, the same guy ratio is used, for example, 3:1 (at right angles to the centre line), i.e. the height of the tower is three times the lateral position of the guy from the leg. On the side of the corridor with two guys, the absolute guy ratio is about 2:1. The high voltage transmission-line tower can also be implemented with the aid of more than three guys, for example, with four, six, or eight guys (according to the intermediate guys). The angles between the positions of the base-level guys will change accordingly.

In the solution according to the invention, it is easy to calculate the forces acting on the high voltage transmission-line tower. In the freestanding, rigid lattice structures presently in use, the loadings are computationally more demanding.

The support 40 and horizontal support 42 between the beam gantry 26 and slanting earth peaks 28, at the upper end of the high voltage transmission-line tower 10, can be seen more clearly in Figure 2. The supports of the phase conductors 16 and 17 are set in an essentially triangular arrangement. In this connection, the term essentially triangular arrangement refers to the fact that one of the phase conductors is preferably higher than the other two phase conductors and is between in the lateral direction, the other phase conductors being on the same horizontal level and preferably lower than the upper phase conductor. The 'triangularity' of the triangular arrangement can vary, while the main form remains a triangle according to Figure 2. Figure 2 uses broken lines to show the possible lateral shift of the support of the guys.

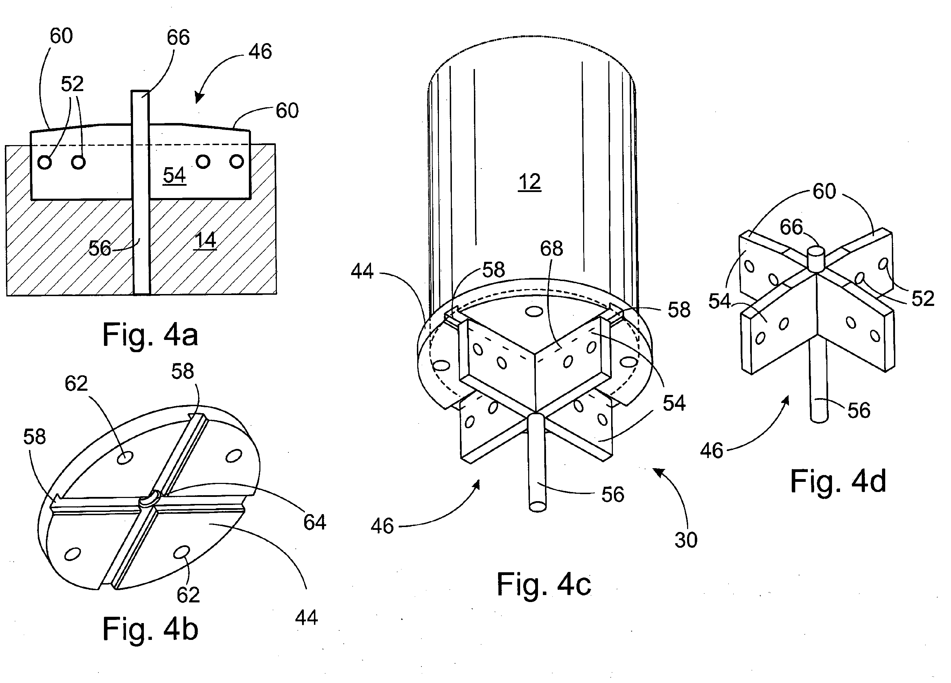

The central feature of the high voltage transmission-line tower 10 is the support of the lower end 33 (Figure 2) of the tower part 12 on the foundation 14. Here, a so-called Oldham coupling 30 (Figure 4c) is used, which permits the tower to tilt but transmits torque. The asymmetrical loading, a powerful torsion, caused by the breaking of a phase conductor or earth wire is then transmitted to the foundation. Naturally, both the tower part and the foundation are dimensioned to withstand such torque. Tilting, on the other hand, transmits all horizontal forces to the guys. In connection with high voltage transmission-line towers, it is possible to use intermediate guys to increase the buckling-resistance capacity. In this connection, the terms high towers refers to towers with a height of more than 20 metres (depending on the buckling-resistance capacity of the leg).

Figure 4c shows the base part 44 permanently attached to the tower part 12 and the cross-shaped plate part 46 cast into the foundation 14 (Figures 1 - 3). In the figure, the plate part has been detached form the foundation of Figure 4a. The broken lines show the point at which the tower part 12 and the base part 44 meet. The plate part 46 cast into the foundation 14 preferably consists of four flanges 54 welded at an angle of 90° to each other, which are attached to each other with the aid of a round rod 56 as in Figure 4d. The upper parts of the flanges 54 are bevelled to form bevel parts 60. The totality can, for example, be cast according to Figure 4a into the concrete column acting as the foundation 14, up to the broken lines 68, so that part of the flanges 54 remains above the concrete. The parts of the flanges remaining above the concrete receive the compressive loading and through that carry the entire high voltage transmission-line tower. Thus the base part (the base plate of the tube) is not in contact with the actual concrete foundation, so that additional strains are not directed to the foundation 14 when the tower part 12 tilts. There can be holes 52 in the flanges 54, which can be used as feed-throughs for the foundation's steel reinforcement. In this case, the horizontal dimension of the plate part 46 is 300 mm and its thickness is 20 mm. The dimensions of the plate part can naturally vary according to the loading, preferably in the range 200 - 450 mm.

Figure 4b shows the base part 44 attached to the tower part 12 (Figure 4c). The base part includes grooves 58, into which the flanges 54 of the plate part 46 shown in Figure 4a fit. In addition, the base part 44 includes a hole 64, into which the part 66 of the round rod 56 of the coupling part cast into the foundation fits. In the base part 44 there are preferably also holes 62, for draining water from inside the tower part 12.

Figure 4c shows the overall construction of the Oldham coupling 30 without the foundation. It can be seen from the figure how the plate part, i.e. the male part 46 lies in the grooves 58 of the base part of the tower part 12, i.e. the female part 44. The bevel portions 60 (Figure 4a) of the flanges 54 of the plate part 46 permit the tower 12 to tilt. The plate part 46 is made from a material that will withstand the strains imposed on it by the tower part 12, for example, from steel or a corresponding material.

The preferred embodiment of the high voltage transmission-line tower according to the invention is an intermediate support, because if used as a tensioning tower the structure of the high voltage transmission-line tower would have to be reinforced in the case of torsional stiffness. The high voltage transmission-line tower can also be used as a corner tower.

## Claims

1. One-legged high voltage transmission-line tower, which high voltage transmission-line tower (10) includes a guyed tower part (12) as a leg and its foundation (14), insulators (18, 20) for carrying the phase conductors (16, 17) of a 3-phase high voltage transmission line, earth-wire peaks (28) supported on a beam gantry (26) and the said tower part (12) for carrying earth wires (22), **characterized in that** the high voltage transmission-line tower (10) includes a coupling (30) permitting the tilting of the tower part (12), wherein the coupling (30) is adapted for transmitting torque between the high voltage transmission tower's (10) lower end (33) and the foundation (14).

2. High voltage transmission-line tower according to Claim 1, **characterized in that** the high voltage transmission-line tower (10) includes three guys (32), of which one guy (32') is on one side of the high voltage transmission-line corridor and two guys (32") are on the other side of the high voltage transmission-line corridor, and all the guys (32) are located at essentially the edges of the high voltage transmission-line corridor.

3. High voltage transmission-line tower according to Claim 2, **characterized in that** the slope of the said one guy (32') of the high voltage transmission-line tower (10), seen from the direction of the line, is 3:1 ± 25 % and the slopes of the said two guys (32") seen at right angles to the line are 5:2 ± 25 %.

4. High voltage transmission-line tower according to any of Claims 1 - 3, **characterized in that** the coupling (30) transmitting the moment is a so-called Oldham coupling.

5. High voltage transmission-line tower according to Claim 4, **characterized in that** the male part (46) belonging to the Oldham coupling is secured permanently to the foundation (14) and the female part (44) is correspondingly secured permanently to the lower end of the tower part (12).

6. High voltage transmission-line tower according to any of Claims 1 - 5, **characterized in that** the upper end (31) of the high voltage transmission-line tower (10) includes the said earth peaks (28) which are set in a V shape, between which the insulators (20) carrying the third phase conductor (17) between them are attached, and in which the earth wires (22) are attached to extensions (29) of the earth peaks (28) above and to the sides of the phase conductors (16, 17).

7. High voltage transmission-line tower according to any of Claims 1 - 6, **characterized in that** the tower part (12) and/or the earth peaks (28) are of weather-resistant high-strength steel.

8. High voltage transmission-line tower according to any of Claims 1 - 7, **characterized in that** the high voltage transmission-line tower (10) is arranged to be used as an intermediate support.

9. High voltage transmission-line tower according to any of Claims 1 - 8, **characterized in that** the high voltage transmission-line tower (10) is manufactured as a tubular construction.

10. High voltage transmission-line tower according to any of Claims 1 - 9, **characterized in that** in high voltage transmission-line towers (10) there are intermediate guys in order to increase the buckling-resistance capacity.

11. High voltage transmission-line tower according to any of Claims 1 - 10, **characterized in that** the said earth peaks (28) include a horizontal support (42) in order to support the earth peaks (28).

## Patentansprüche

1. Einbeiniger Hochspannungsübertragungsleitungsmast, wobei der Hochspannungsübertragungsleitungsmast (10) einen abgespannten Mastteil (12) als Standbein und Fundament (14), Isolatoren (18, 20) zur Aufnahme der Phasenleiter (16, 17) einer dreiphasigen Hochspannungsübertragungsleitung, Erdungsspitzen (28) montiert auf einem Balkengantry (26) und den genannten Mastteil (12) zum Tragen der Erdungskabel (22) umfasst, **dadurch gekennzeichnet, dass** der Hochspannungsübertragungsleitungsmast (10) über eine Kupplung (30) verfügt, die ein Kippen des Mastteils (12) erlaubt, wobei die Kupplung (30) dazu ausgelegt ist, ein Drehmoment zwischen dem unteren Ende (33) und dem Fundament (14) des Hochspannungsübertragungsmastes (10) zu übertragen.

2. Ein Hochspannungsübertragungsleitungsmast nach Anspruch 1, **dadurch gekennzeichnet, dass** der Hochspannungsübertragungsleitungsmast (10) über drei Abspannseile (32) verfügt, wobei ein Abspannseil (32') sich auf einer Seite des Hochspannungsübertragungsleitungskorridors befindet, und die anderen beiden Abspannseile (32") sich auf der anderen Seite des Hochspannungsübertragungsleitungskorridors befinden und alle Abspannseile (32) grundsätzlich an den Rändern des Hochspannungsübertragungsleitungskorridors angebracht sind.

3. Ein Hochspannungsübertragungsleitungsmast nach Anspruch 2, **dadurch gekennzeichnet, dass** die Neigung des genannten Abspannseils (32') des Hochspannungsübertragungsleitungsmastes (10) aus der Blickrichtung von dem Seil aus 3:1 ± 25 % beträgt und die Neigungen der genannten zwei Abspannseile (32") aus einem Blickwinkel im rechten Winkel zu der Leitung 5:2 ± 25 % betragen.

4. Ein Hochspannungsübertragungsleitungsmast nach einem der Ansprüche 1 - 3, **dadurch gekennzeichnet, dass** es sich bei der Kupplung (30), die das Moment überträgt, um eine so genannte Oldham-Kupplung handelt.

5. Ein Hochspannungsübertragungsleitungsmast nach Anspruch 4,**dadurch gekennzeichnet, dass** das Kupplungsvaterteil (46) der Oldham-Kupplung dauerhaft mit dem Fundament (14) verbunden ist, und das Kupplungsmutterteil (44) entsprechend dauerhaft mit dem unteren Ende des Mastteils (12) verbunden ist.

6. Ein Hochspannungsübertragungsleitungsmast nach einem der Ansprüche 1 - 5, **dadurch gekennzeichnet, dass** das obere Ende (31) des Hochspannungsübertragungsleitungsmastes (10) die genannten beiden Erdungsspitzen (28) umfasst, die in einer V-Anordnung angebracht sind, und zwischen denen die Isolatoren (20), die den Drittphasenleiter (17) zwischen sich tragen, angebracht sind, und bei dem die Erdungskabel (22) an den Erweiterungen (29) der obengenannten Erdungsspitzen (28) sowie an den Seiten der Phasenleiter (16, 17) angebracht sind.

7. Ein Hochspannungsübertragungsleitungsmast nach einem der Ansprüche 1 - 6, **dadurch gekennzeichnet, dass** der Mastteil (12) bzw. die Erdungsspitzen (28) aus wetterbeständigem hochfesten Stahl bestehen.

8. Ein Hochspannungsübertragungsleitungsmast nach einem der Ansprüche 1 - 7, **dadurch gekennzeichnet, dass** der Hochspannungsübertragungsleitungsmast (10) so ausgerichtet ist, dass er als Zwischenstütze verwendet werden kann.

9. Ein Hochspannungsübertragungsleitungsmast nach einem der Ansprüche 1 - 8, **dadurch gekennzeichnet, dass** der Hochspannungsübertragungsleitungsmast (10) als Rohrkonstruktion ausgeführt wird.

10. Ein Hochspannungsübertragungsleitungsmast nach einem der Ansprüche 1 - 9, **dadurch gekennzeichnet, dass** an den Hochspannungsübertragungsleitungsmasten (10) Zwischenabspannseile angebracht sind, um die Knickfestigkeit zu erhöhen.

11. Ein Hochspannungsübertragungsleitungsmast nach einem der Ansprüche 1 - 10, **dadurch gekennzeichnet, dass** die genannten Erdungsspitzen (28) einen waagerechten Träger (42) umfassen, um die Erdungsspitzen (28) abzustützen.

## Revendications

1. Pylône électrique de ligne haute tension à un seul pied, lequel pylône électrique de ligne haute tension (10) comprend un mât haubané (12), servant de pied et de base (14), des isolateurs (18, 20) pour porter les conducteurs de phase (16, 17) d'une ligne haute tension triphasée, des chevalets de câbles de garde (28) supportés par une poutre (26) et ledit mât (12) pour porter les câbles de garde (22), **caractérisé en ce que** le pylône électrique de ligne haute tension (10) comprend un couplage (30) permettant l'inclinaison du mât (12), dans lequel le couplage (30) est adapté pour transmettre le couple entre l'extrémité inférieure (33) et la base (14) du pylône électrique de ligne haute tension (10).

2. Pylône électrique de ligne haute tension conformément à la revendication 1, **caractérisé en ce que** le pylône électrique de ligne haute tension (10) comprend trois haubans (32), dont l'un (32') se trouve d'un côté du couloir haute tension et les deux autres (32") se trouvent de l'autre côté du couloir haute tension, tous les haubans (32) se trouvant essentiellement aux bords du couloir haute tension.

3. Pylône électrique de ligne haute tension conformément à la revendication 2, **caractérisé en ce que** la pente dudit hauban (32') du pylône électrique de ligne haute tension (10), vue dans l'axe de la ligne, est de 3:1 ± 25 % et les pentes desdits deux haubans (32"), vues perpendiculairement à la ligne, sont de 5:2 ± 25 %.

4. Pylône électrique de ligne haute tension conformément à l'une des revendications 1 à 3, **caractérisé en ce que** le couplage (30) transmettant le moment est un couplage dit Oldham.

5. Pylône électrique de ligne haute tension conformément à la revendication 4, **caractérisé en ce que** la partie mâle (46) appartenant au couplage Oldham est fixée à la base (14) et la partie femelle (44) est de ce fait fixée à l'extrémité inférieure du mât (12).

6. Pylône électrique de ligne haute tension conformément à l'une des revendications 1 à 5, **caractérisé en ce que** l'extrémité supérieure (31) du pylône électrique de ligne haute tension (10) comprend lesdits chevalets de câbles de garde (28) en forme de V, entre lesquels sont attachés les isolateurs (20) portant le troisième conducteur de phase (17) entre eux, et dans lesquels les câbles de garde (22) sont attachés à des extensions (29) des chevalets de câbles de garde (28) au-dessus et sur les côtés des conducteurs de phase (16, 17).

7. Pylône électrique de ligne haute tension conformément à l'une des revendications 1 à 6, **caractérisé en ce que** le mât (12) et/ou les chevalets de câbles de garde (28) sont réalisés en acier à haute résistance mécanique, résistant aux intempéries.

8. Pylône électrique de ligne haute tension conformément à l'une des revendications 1 à 7, **caractérisé en ce que** le pylône électrique de ligne haute tension (10) est agencé de manière à servir de support intermédiaire.

9. Pylône électrique de ligne haute tension conformément à l'une des revendications 1 à 8, **caractérisé en ce que** le pylône électrique de ligne haute tension (10) est fabriqué comme une construction tubulaire.

10. Pylône électrique de ligne haute tension conformément à l'une des revendications 1 à 9, **caractérisé en ce que** les pylônes électriques de ligne haute tension (10) comprennent des haubans intermédiaires afin d'augmenter la capacité de résistance au flambage.

11. Pylône électrique de ligne haute tension conformément à l'une des revendications 1 à 10, **caractérisé en ce que** lesdits chevalets de câbles de garde (28) comprennent un support horizontal (42) afin de supporter les chevalets de câbles de garde (28).
